# EUROPÄISCHE PATENTSCHRIFT

(11) **EP 1 618 046 B1**
(45) Veröffentlichungstag und Bekanntmachung des Hinweises auf die Patenterteilung: **24.01.2007**
(21) Anmeldenummer: 04725674.8
(22) Anmeldetag: 05.04.2004
(51) Int. Cl.: B65D 75/36, B65D 75/28, A61J 1/03

(54) **BLISTERVERPACKUNG**
BLISTER PACK
EMBALLAGE-COQUE

(30) Priorität: 16.04.2003 EP 03405270
(43) Veröffentlichungstag der Anmeldung: 25.01.2006
(73) Patentinhaber: Alcan Technology & Management Ltd., 8212 Neuhausen am Rheinfall (CH)
(72) Erfinder: PASBRIG, Erwin, 78224 Singen (DE)
(86) Internationale Anmeldenummer: PCT/EP2004/003577
(87) Internationale Veröffentlichungsnummer: WO 2004/092035

(56) Entgegenhaltungen:
- EP-A- 0 389 207
- GB-A- 317 267
- US-A- 3 331 495
- US-A- 3 933 559

## Beschreibung

Die Erfindung betrifft eine Blisterverpackung für pharmazeutische Produkte, Diagnostika oder medizinische Geräte, mit einem aus Kunststoff thermogeformten Blisterbodenteil, einer Deckfolie aus Aluminium oder einem Aluminium/Kunststoff-Verbund und einer gegen die Rückseite des Blisterbodenteils gesiegelten, aus einer Aluminium/Kunststoff-Verbundfolie kaltgeformten Untersiegelwanne.

Bei den unter dem Begriff "Tropenblister" bekannten Blisterverpackungen mit thermogeformtem Blisterbodenteil besteht die Deckfolie aus Aluminium oder einem Aluminium/Kunststoff-Verbund und gegen die Rückseite des Blisterbodenteils ist eine aus einem Aluminium/Kunststoff-Laminat kaltgeformte Untersiegelwanne gesiegelt. Damit ist bei einem Tropenblister das Blisterbodenteil mit dem Füllgut durch die Aluminiumfolien in der Deckschicht und in der Untersiegelwanne vollständig gegen das Eindringen von Wasserdampf und Gasen aus der Aussenatmosphäre geschützt.

Bei den heute bekannten Tropenblistern (vgl. beispielsweise US-A-3,331,495) ist die Untersiegelwanne fest gegen das Bodenteil gesiegelt. Das Füllgut wird durch Druck auf das Aluminium/Kunststoff-Laminat und den darunter liegenden, thermogeformten Napf des Bodenteils durch die Deckfolie gedrückt. Da weder das Füllgut noch der einzelne Napf von aussen sichtbar ist, können sich beim Herausdrücken des Füllgutes Probleme ergeben.

Bei Deckfolien, die durch Peelen entfernt werden können, dürfen wegen der Querdiffusion von Feuchtigkeit und Sauerstoff sowie der Gefahr des Abreissens der Deckfolie keine Perforationen angebracht werden. Es besteht deshalb ein sehr hohes Risiko, dass beim Peelen der Deckfolie nicht nur der zur Öffnung vorgesehene Napf freigelegt, sondern auch der benachbarte Napf zumindest teilweise geöffnet wird.

Da das Aluminium/Kunststoff-Laminat der Untersiegelwanne während der Logistikkette einen ausreichenden Schutz des Füllgutes gegen Feuchtigkeit, UV-Strahlen und Sauerstoff gewährleistet, wird als Kunststoff für den thermogeformten Blister PVC oder PVC/ 40 - 60 g/m² PVDC verwendet. Damit die garantierte minimale Haltbarkeit des Füllgutes nicht überschritten wird, muss die Blisterpackung nach der erstmaligen Entnahme von Füllgut in verhältnismässig kurzer Zeit aufgebraucht werden.

Der Erfindung liegt die Aufgabe zugrunde, einen Tropenblister der eingangs genannten Art zu schaffen, bei dem das Füllgut vor der Entnahme sichtbar ist und damit ohne Beschädigung benachbarter Bereiche durch die Deckfolie gedrückt werden kann. Zudem soll die Haltbarkeit des Füllgutes, in Abhängigkeit des für das thermogeformte Bodenteil verwendeten Kunststoffmaterials, nach der erstmaligen Entnahme von Füllgut für die verbleibende Packung länger gewährleistet sein.

Zur erfindungsgemässen Lösung der Aufgabe führt, dass die Aluminium/Kunststoff-Verbundfolie der Untersiegelwanne auf der gegen das Blisterbodenteil gerichteten Seite eine peelbare Heisssiegelschicht aus einem Lack mit einem Auftragsgewicht von 2 bis 20 g/m², vorzugsweise 7 bis 15 g/m², einen peelbaren Kunststofffilm mit einer Foliendicke von 10 bis 40 µm, vorzugsweise 15 bis 30 µm, oder eine peelbare Kunststoffbeschichtung mit einem Auftragsgewicht von 5 bis 40 g/m², vorzugsweise 7 bis 20 g/m², aufweist.

Selbstverständlich kann die erfindungsgemässe Lösung auch für die derzeit eingesetzten thermogeformten Kunststoffe für die "Untersiegelwanne" verwendet werden.

Zur Erzielung einer optimalen Haltbarkeit des Füllgutes weist der Kunststoff des Blisterbodenteils eine Barriere mit Durchtrittsperrwirkung gegen Wasserdampf und/oder Gase auf.

Der Kunststoff des Blisterbodenteils mit Barriereeigenschaften kann aus einem Laminat mit der Schichtfolge PVC/PVDC, PVC/PE/PVDC, PVC/PCTFE, PVC/PE/ PCTFE, PVC/PCTFE/PVC, PVC/PE, PVC/COC/PE, PVC/COC/PVC, PVC/COC/PVDC, PVC/COC/PP, PVC/COC/PE, PVC/COC, PP/PVDC, PP/PCTFE, PP/PCTFE/PP, PP/COC/PP, PP/PET, PP/PE, PP/COC/PE, PP/COC/PCTFE, PP/COC, PET/PP/PVDC, PET/COC/PP, PET/COC/PVC, PET/COC/PVDC, PET/COC/PE, PET/PVC/PCTFE, PET/COC, PE/PCTFE, HDPE/PVDC, HDPE/PVC, PE/PCTFE/PE, PE/COC/PVDC, PE/COC aufgebaut sein. Das Blisterbodenteil kann aber auch aus LCP, HDPE, PP, PVC oder LCP enthaltendem PET bestehen.

Das Blisterbodenteil kann auch aus den üblicherweise eingesetzten Kunststoffen ohne spezielle Barriereeigenschaften aufgebaut sein, sofern die beschränkte Haltbarkeit des Füllgutes nach Entfernen der Untersiegelwanne beachtet wird.

Bei der erfindungsgemässen Blisterverpackung wird eine Durchdrückfolie als Deckfolie bevorzugt. Wird jedoch eine peelbare Öffnung gewünscht, können die vorgeschlagenen Lösungen selbstverständlich ebenfalls verwendet werden.

Die gegen die Rückseite des Blisterbodenteils gerichtete peelbare Heisssiegelschicht der Aluminium/Kunststoff-Verbundfolie der Untersiegelwanne ist zweckmässigerweise mit den gleichen chemischen Grundkomponenten wie der die Siegelfläche bildende Kunststoff des Blisterbodenteils oder Abmischungen dieser Grundkomponenten mit Stoffen, die einen adhäsiven oder kohäsiven Bruch bewirken, aufgebaut.

Stoffe, die einen adhäsiven oder kohäsiven Bruch bewirken, sind z.B. Acrylate, Polybutylate, Morprime, Styrolacrylat mit Polyolefingruppen, PVC/AC plus Acrylat, PP/Butadien oder Polyester/Butadien/Styrol.

Der gegen die Rückseite des Blisterbodenteils gerichtete peelbare Kunststofffilm oder die gegen die Rückseite des Blisterbodenteils gerichtete peelbare Kunststoffbeschichtung ist bevorzugt auf der Basis von PVC, PP, Metallocen-PP, PE, Metallocen-PE, ACLAR® (PCTFE), PET, EAA, lonomeren von PE und PE-Acrylaten, EVA und Copolymeren mit EVA aufgebaut.

Der peelbare Kunststofffilm kann mit einer peelbaren Beschichtung extrudiert, coextrudiert oder lackkaschiert, die Kunststoffbeschichtung mit einer peelbaren Schicht coextrudiert sein.

Weitere Vorteile, Merkmale und Einzelheiten der Erfindung ergeben sich aus der nachfolgenden Beschreibung bevorzugter Ausführungsbeispiele sowie anhand der Zeichnung; diese zeigt schematisch in
- - Fig. 1: einen Querschnitt durch einen Teil einer Blisterverpackung mit peelbarer Untersiegelwanne und Aufreisslasche;
- - Fig. 2: eine Ansicht der Blisterverpackung von Fig. 1 mit einer ersten Ausführung einer Aufreisslasche in Blickrichtung A;
- - Fig. 3: eine Ansicht der Blisterverpackung von Fig. 1 mit einer zweiten Ausführungsform einer Aufreisslasche in Blickrichtung A;
- - Fig. 4: eine Ansicht der Blisterverpackung von Fig. 1 mit einer dritten Ausführungsform einer Aufreisslasche in Blickrichtung A.

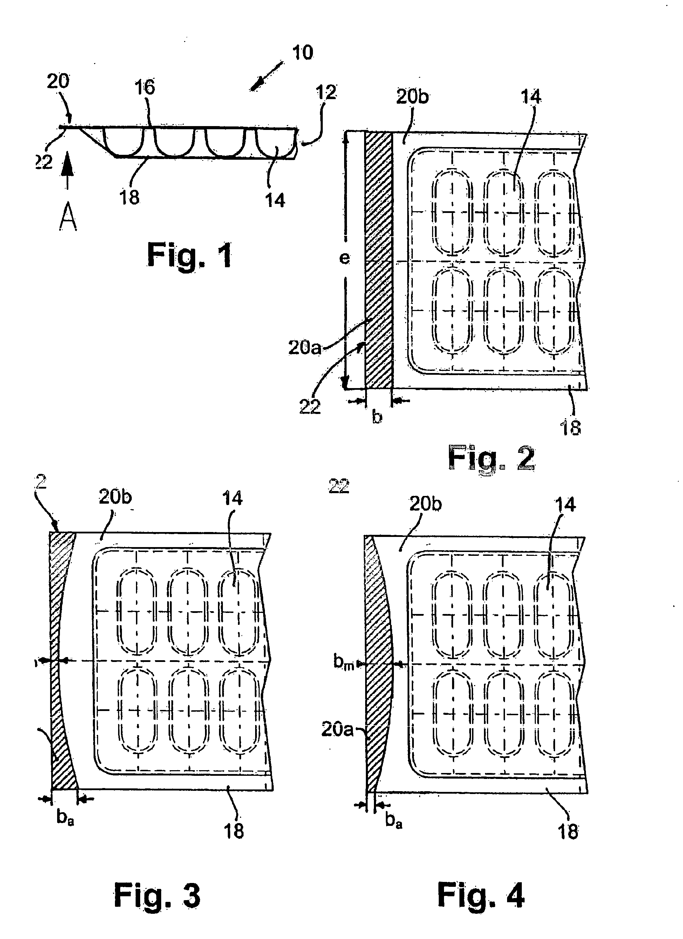

Eine den Fig. 1 bis 4 gezeigte Blisterverpackung 10 in der Form eines Tropenblisters weist ein Bodenteil 12 mit von diesem ausgeformten einzelnen Blistern oder Näpfen 14 zur Aufnahme eines in der Zeichnung nicht dargestellten pharmazeutischen Füllgutes wie z.B. Tabletten oder Kapseln, Diagnostika oder medizinische Geräte auf. Gegen das Bodenteil 12 ist auf der Seite der Oeffnungen der Näpfe 14 eine die Näpfe 14 dicht verschliessende Deckfolie 16 gesiegelt.

Auf der der Deckfolie 16 gegenüberliegenden Seite erstreckt sich eine weitere Folie in der Form einer Untersiegelwanne 18 über die ausgeformten Näpfe 14 und ist peelbar gegen einen umlaufenden Rand 20 des Bodenteils 12 gesiegelt. Die Barriereeigenschaften der Untersiegelwanne 18 verhindern ein Eindringen von Wasserdampf und Gasen von der Aussenatmosphäre in den Füllraum der Näpfe 14.

Im Bereich einer Seitenkante der Blisterverpackung 10 ist die Untersiegeiwanne unter Bildung einer Aufreisslasche 22 in einem schmalen Bereich 20a nicht gegen das Bodenteil 12 gesiegelt. In den Fig. 2 bis 4 sind unterschiedliche Ausführungen von Aufreisslaschen 22 bzw. entsprechend ungesiegelter Zonen dargestellt. Bei einer beispielhaften Seitenkantenlänge e der Blisterverpackung 10 von 68 mm weist die Aufreisslasche von Fig. 2 eine gleichbleibende Breite b von 7 mm auf. Die Aufreisslasche von Fig. 3 weist in der Mitte eine Breite bₘ von beispielsweise 2 mm und aussen eine Breite bₐ von 7 mm auf. Bei der Aufreisslasche von Fig. 4 ist die Breite bₘ in der Mitte 7 mm, die Breite bₐ am Aussenrand 2 mm.

In der nachstehenden Tabelle sind Beispiele von erfindungsgemäss als Material für die Herstellung der kaltgeformten Untersiegelwanne verwendeten Aluminium/Kunststoff-Laminaten zusammengestellt. Mit "Beschichtung aussen" ist die nach aussen, mit "Beschichtung innen" die zur Siegelung gegen den Kunststoff an der Aussenseite des Blisterbodenteils gerichtete Beschichtung/Lackierung der Aluminiumfolie bezeichnet, jeweils unter Angabe des Flächengewichts bei Beschichtung/Lackierung bzw. der Foliendicke bei Kaschierung der Kunststofffolie. Die Tabelle enthält zudem die entsprechend der innenseitigen Beschichtung/Lackierung der Laminate der Untersiegelwanne für die Aussenseite des Blisterbodenteil ausgewählten Kunststoffe, gegen welche die Siegelung des Aluminium/Kunststoff-Laminates durchgeführt wird.

| **Beispiel** | **Beschichtung aussen** | **Al-Folie** | **Beschichtung innen** | **Bodenteil aussen** |
|---|---|---|---|---|
| 1 | oPA, 25 µm | 45 µm | HSL (Heisssiegellack) auf Basis PVC/AC plus Acrylat, 10 g/m² | PVDC oder PVC |
| 2 | oPA, 25 µm | 60 µm | | |
| 3 | oPP, 20 µm | 45 µm | | |
| 4 | PET-Folie, 23 µm | 45 µm | | |
| 5 | oPA, 25 µm | 45 µm | HSL auf Basis Acrylat mit Polyolefingruppen, 10 g/m² | |
| 6 | oPA, 25 µm | 45 µm | PVC-Folie, 10 µm, peelbar | |
| 7 | oPA, 25 µm | 45 µm | PVC-Folie, 15 µm, peelbar | |
| 8 | oPA, 25 µm | 45 µm | HSL auf Basis PP/Butadien, 10 g/m² | PP |
| 9 | oPA, 25 µm | 60 µm | | |
| 10 | oPP, 20 µm | 45 µm | | |
| 11 | PET-Folie, 23 µm | 45 µm | | |
| 12 | oPA, 25 µm | 45 µm | HSL auf Basis Acrylat mit Polyolefingruppen, 10 g/m² | |
| 13 | oPA, 25 µm | 45 µm | PP-Folie, 20 µm, peelbar | |
| 14 | oPA, 25 µm | 45 µm | HSL auf Basis PVC/AC plus Acrylat, 10 g/m² | PET |
| 15 | oPA, 25 µm | 60 µm | | |
| 16 | oPP, 20 µm | 45 µm | | |
| 17 | PET-Folie, 23 µm | 45 µm | | |
| 18 | oPA, 25 µm | 45 µm | HSL auf Basis Polyester mit Acrylat, 10 g/m² | |
| 19 | oPA, 25 µm | 40 µm | HSL auf Basis PVC/AC plus Acrylat, 10 g/m² | |
| 20 | oPA, 25 µm | 45 µm | PET-Folie, 12 µm, peelbar | |
| 21 | oPA, 25 µm | 45 µm | HSL auf Basis Polyester/Butadien/Styrol, 10 g/m² | PE |
| 22 | oPA, 25 µm | 60 µm | | |
| 23 | oPA, 25 µm | 40 µm | | |
| 24 | oPA, 25 µm | 36 µm | | |
| 25 | oPP, 20 µm | 45 µm | | |
| 26 | PET-Folie, 23 µm | 45 µm | | |
| 27 | oPA, 25 µm | 45 µm | HSL auf Basis Acrylat mit Polyolefingruppen, 10g/m² | |
| 28 | oPA, 25 µm | 45 µm | PE-peel-Folie, 40 µm | |
| 29 | oPA, 25 µm | 40 µm | HSL auf Basis PVC/AC plus Acrylat, 10 g/_{M}² | |
| 30 | oPA, 25 µm | 36 µm | | |
| 31 | oPA, 25 µm | 40 µm | HSL auf Basis PP/Butadien, 10 g/m² | |
| 32 | oPA, 25 µm | 36 µm | | |
| 33 | oPA, 25 µm | 36 µm | HSL auf Basis PVC/AC plus Acrylat, 10 g/m² | |
| 34 | oPA, 25 µm | 45 µm | HSL auf Basis EVA/Acrylat, 10 g/m² | ACLAR® (PCTFE) |
| 35 | oPA, 25 µm | 60 µm | | |
| 36 | oPA, 25 µm | 40 µm | | |
| 37 | oPA, 25 µm | 36 µm | | |
| 38 | oPP, 20 µm | 45 µm | | |
| 39 | PET-Folie, 23 µm | 45 µm | | |
| 40 | oPA, 25 µm | 45 µm | HSL auf Basis ACLAR® /EVA/ Acrylat | |
| 41 | oPA, 25 µm | 45 µm | HSL auf Basis EVA/Copolymer, 20 g/m² | |

## Patentansprüche

1. Blisterverpackung für pharmazeutische Produkte, Diagnostika oder medizinische Geräte, mit einem aus Kunststoff thermogeformten Blisterbodenteil (12), einer Deckfolie (16) aus Aluminium oder einem Aluminium/Kunststoff-Verbund und einer gegen die Rückseite des Blisterbodenteils (12) gesiegelten, aus einer Aluminium/Kunststoff-Verbundfolie kaltgeformten Untersiegelwanne (18),
**dadurch gekennzeichnet, dass**
die Aluminium/Kunststoff-Verbundfolie der Untersiegelwanne (18) auf der gegen das Blisterbodenteil (12) gerichteten Seite eine peelbare Heisssiegelschicht aus einem Lack mit einem Auftragsgewicht von 2 bis 20 g/m², einen peelbaren Kunststofffilm mit einer Foliendicke von 10 bis 40 µm, vorzugsweise 15 bis 30 µm, oder eine peelbare Kunststoffbeschichtung mit einem Auftragsgewicht von 5 bis 40 g/m², vorzugsweise 7 bis 20 g/m², aufweist.

2. Blisterverpackung nach Anspruch 1, **dadurch gekennzeichnet, dass** die peelbare Heisssiegelschicht aus einem Lack mit einem Auftragsgewicht von 7 bis 15 g/m² besteht.

3. Blisterverpackung nach Anspruch 1, **dadurch gekennzeichnet, dass** der peelbare Kunststofffilm eine Foliendicke von 15 bis 30 µm aufweist.

4. Blisterverpackung nach Anspruch 1, **dadurch gekennzeichnet, dass** die peelbare Kunststoffbeschichtung ein Auftragsgewicht von 7 bis 20 g/m² aufweist.

5. Blisterverpackung nach einem der Ansprüche 1 bis 4, **dadurch gekennzeichnet, dass** der Kunststoff des Blisterbodenteils' (12) eine Barriere mit Durchtrittsperrwirkung gegen Wasserdampf und/oder Gase aufweist.

6. Blisterverpackung nach Anspruch 5, **dadurch gekennzeichnet, dass** das Blisterbodenteil (12) aus einem Laminat mit der Schichtfolge PVC/PVDC, PVC/PE/PVDC, PVC/PCTFE, PVC/PE/ PCTFE, PVC/PCTFE/PVC, PVC/PE, PVC/COC/PE, PVC/COC/PVC, PVC/COC/PVDC, PVC/COC/PP, PVC/COC/PE, PVC/COC, PP/PVDC, PP/PCTFE, PP/PCTFE/PP, PP/COC/PP, PP/PET, PP/PE, PP/COC/PE, PP/COC/PCTFE, PP/COC, PET/PP/PVDC, PET/COC/PP, PET/COC/PVC, PET/COC/PVDC, PET/COC/PE, PET/PVC/PCTFE, PET/COC, PE/PCTFE, HDPE/PVDC, HDPE/PVC, PE/PCTFE/PE, PE/COC/PVDC, PE/COC oder aus LCP, HDPE, PP, PVC oder LCP enthaltendem PET aufgebaut ist.

7. Blisterverpackung nach einem der Ansprüche 1 bis 6, **dadurch gekennzeichnet, dass** die von der Rückseite des Blisterbodenteils (12) peelbare Aluminium/Kunststaff-Verbundfolie der Untersiegelwanne (18) eine 15 bis 80 µm, vorzugsweise 25 bis 60 µm dicke Aluminiumfolie ist, die auf der vom Blisterbodenteil (12) weg weisenden Seite
mit einer Kunststofffolie aus orientiertem Polyamid (oPA), Polyethylenterephtalat (PET) oder orientiertem Polypropylen (oPP) mit einer Foliendicke von 10 bis 30 µm, vorzugsweise 15 bis 25 µm kaschiert ist, oder mit einem Schutzlack auf der Basis der Lackrohstoffe Nitrocellulose, Epoxyharz, Polyester, Polyurethan oder Abmischungen der genannten Lackrohstoffe mit einem Auftragsgewicht von 1 bis 20 g/m², vorzugsweise 7 bis 15 g/m², lackiert ist.

8. Blisterverpackung nach einem der Ansprüche 1 bis 7, **dadurch gekennzeichnet, dass** die gegen die Rückseite des Blisterbodenteils (12) gerichtete peelbare Heisssiegelschicht mit den gleichen oder ähnlichen chemischen Grundkomponenten wie der die Siegelfläche bildende Kunststoff des Blisterbodenteils (12) oder Abmischungen dieser Grundkomponenten mit Stoffen, die einen adhäsiven oder kohäsiven Bruch bewirken, aufgebaut ist.

9. Blisterverpackung nach Anspruch 8, **dadurch gekennzeichnet, dass** der Lack als Stoffe, die einen adhäsiven oder kohäsiven Bruch bewirken, Acrylate, Polybutylate, Morprime, Styrolacrylat mit Polyolefingruppen, PVC/AC mit Acrylat, PP/Butadien oder Polyester/Butadien/Styrol enthält.

10. Blisterverpackung nach einem der Ansprüche 1 bis 9, **dadurch gekennzeichnet, dass** der gegen die Rückseite des Büsterbodenteils (12) gerichtete peelbare Kunststofffilm oder die gegen die Rückseite des Blisterbodenteils (12) gerichtete peelbare Kunststoffbeschichtung auf der Basis von PVC, PP, Metallocen-PP, PE, Metallocen-PE, PCTFE, PET, EAA, lonomeren von PE und PE-Acrylaten, EVA und Copolymeren mit EVA aufgebaut ist.

11. Blisterverpackung nach Anspruch 10, **dadurch gekennzeichnet, dass** der peelbare Kunststofffilm mit einer peelbaren Beschichtung extrudiert, coextrudiert oder lackkaschiert ist.

12. Blistenrerpackung nach Anspruch 10, **dadurch gekennzeichnet, dass** die Kunststoffbeschichtung mit einer peelbaren Schicht coextrudiert ist.

## Claims

1. Blister pack for pharmaceutical products, diagnostic reagents or medical devices, comprising a blister bottom part (12) thermoformed from plastic; a covering foil (16) of aluminium or an aluminium/plastic composite and a lower sealing tray (18) cold-formed from an aluminium/plastic composite film sealed to the rear of the blister bottom part (12), **characterised in that** the aluminium/plastic composite film of the lower sealing tray (18) is provided on the side directed towards the blister bottom part (12) with a peelable heat-sealable layer of a lacquer having a coating weight of 2 to 20 g/m², a peelable plastic film having a film thickness of 10 to 40 µm, preferably 15 to 30 µm, or a peelable plastic coating having a coating weight of 5 to 40 g/m², preferably 7 to 20 g/m².

2. Blister pack according to claim 1, **characterised in that** the peelable heat-sealable layer consists of a lacquer having a coating weight of 7 to 15 g/m².

3. Blister pack according to claim 1, **characterised in that** the peelable plastic film has a film thickness of 15 to 30 µm.

4. Blister pack according to claim 1, **characterised in that** the peelable plastic coating has a coating weight of 7 to 20 g/m².

5. Blister pack according to one of claims 1 to 4, **characterised in that** the plastic of the blister bottom part (12) has a barrier with a barrier effect against the passage of water vapour and/or gases.

6. Blister pack according to claim 5, **characterised in that** the blister bottom part (12) is formed of a laminate having the layer sequence PVC/PVDC, PVC/PE/PVDC, PVC/PCTFE, PVC/PE/PCTFE, PVC/PCTFE/PVC, PVC/PE, PVC/COC/PE, PVC/COC/PVC, PVC/COC/PVDC, PVC/COC/PP, PVC/COC/PE, PVC/COC, PP/PVDC, PP/PCTFE, PP/PCTFE/PP, PP/COC/PP, PP/PET, PP/PE, PP/COC/PE, PP/COC/PCTFE, PP/COC, PET/PP/PVDC, PET/COC/PP, PET/COC/PVC, PET/COC/PVDC, PET/COC/PE, PET/PVC/PCTFE, PET/COC, PE/PCTFE, HDPE/PVDC, HDPE/PVC, PE/PCTFE/PE, PE/COC/PVDC, PE/COC or of LCP, HDPE, PP, PVC or PET containing LCP.

7. Blister pack according to one of claims 1 to 6, **characterised in that** the aluminium/plastic composite film of the lower sealing tray (18) which can be peeled off the rear of the blister bottom part (12) is a 15 to 80 µm, preferably 25 to 60 µm thick aluminium foil which on the side directed away from the blister bottom part (12) is laminated with a plastic film of oriented polyamide (oPA), polyethylene terephthalate (PET) or oriented polypropylene (oPP) having a film thickness of 10 to 30 µm, preferably 15 to 25 µm, or is coated with a protective lacquer on the basis of the lacquer raw materials nitrocellulose, epoxy resin, polyester, polyurethane or mixtures of the said lacquer raw materials having a coating weight of 1 to 20 g/m², preferably 7 to 15 g/m².

8. Blister pack according to one of claims 1 to 7, **characterised in that** the peelable heat-sealable layer directed towards the rear of the blister bottom part (12) is formed with the same or similar basic chemical components as the plastic of the blister bottom part (12) forming the sealing surface or- mixtures of these basic components with materials bringing about adhesive or cohesive fracture.

9. Blister pack according to claim 8, **characterised in that** the lacquer contains acrylates, polybutylates, Morprime, styrene acrylate with polyolefin groups, PVC/AC with acrylate, PP/butadiene or polyester/butadiene/styrene as the materials bringing about adhesive or cohesive fracture.

10. Blister pack according to one of claims 1 to 9, **characterised in that** the peelable plastic film directed towards the rear of the blister bottom part (12) or the peelable plastic coating directed towards the rear of the blister bottom part (12) is formed on the basis of PVC, PP, metallocene PP, PE, metallocene PE, PCTFE, PET, EAA, ionomers of PE and PE acrylates, EVA and copolymers with EVA.

11. Blister pack according to claim 10, **characterised in that** the peelable plastic film is extruded, coextruded or lacquer-laminated with a peelable coating.

12. Blister pack according to claim 10, **characterised in that** the plastic coating is coextruded with a peelable layer.

## Revendications

1. Emballage en coque pour produits pharmaceutiques, produits de diagnostic ou appareils médicaux, qui présente une partie (12) en matière synthétique thermoformée qui forme le fond de la coque, un film de recouvrement (16) en aluminium ou en un composite d'aluminium et de matière synthétique et une cuvette inférieure de scellement (18) scellée contre le côté arrière de la partie (12) qui forme le fond de la coque, et constituée d'un film composite d'aluminium et de matière synthétique façonné à froid,
**caractérisé en ce que**
le film composite en aluminium et en matière synthétique de la cuvette inférieure de scellement (18) présente sur son côté tourné vers la partie (12) qui forme le fond de la coque une couche décollable de scellement à chaud constituée d'un vernis appliqué à un poids de 2 à 20 g/m², d'un film en matière synthétique décollable d'une épaisseur de 10 à 40 µm et de préférence de 15 à 30 µm ou d'un revêtement en matière synthétique décollable appliqué à un poids de 5 à 40 g/m² et de préférence de 7 à 20 g/m².

2. Emballage en coque selon la revendication 1, **caractérisé en ce que** la couche de scellement à chaud décollable est constitué d'un vernis appliqué à un poids de 7 à 15 g/m².

3. Emballage en coque selon la revendication 1, **caractérisé en ce que** le film en matière synthétique décollable présente une épaisseur de 15 à 30 µm.

4. Emballage en coque selon la revendication 1, **caractérisé en ce que** le revêtement en matière synthétique décollable est appliqué à un poids de 7 à 20 g/m².

5. Emballage en coque selon l'une des revendications 1 à 4, **caractérisé en ce que** la matière synthétique de la partie (12) qui forme le fond de la coque présente une barrière qui exerce un effet de blocage de la pénétration par la vapeur d'eau et/ou des gaz.

6. Emballage en coque selon la revendication 5, **caractérisé en ce que** la partie (12) qui forme le fond de la coque est constituée d'un stratifié d'une succession de couches de PVC/PVDC, PVC/PE/PVDC, PVC/PCTFE, PVC/PE/PCTFE, PVC/PCTFE/PVC, PVC/PE, PVC/COC/PE, PVC/COC/PVC, PVC/COC/PVDC, PVC/COC/PP, PVC/COC/PE, PVC/COC, PP/PVDC, PP/PCTFE, PP/PCTFE/PP, PP/COC/PP, PP/PET, PP/PE, PP/COC/PE, PP/COC/PCTFE, PP/COC, PET/PP/PVDC, PET/COC/PP, PET/COC/PVC, PET/COC/PVDC, PET/COC/PE, PET/PVC/PCTFE, PET/COC, PE/PCTFE, HDPE/PVDC, HDPE/PVC, PE/PCTFE/PE, PE/COC/PVDC, PE/COC ou de PET qui contient du LCP, de l'HDPE, du PP, du PVC ou du LCP.

7. Emballage en coque selon l'une des revendications 1 à 6, **caractérisé en ce que** le film composite d'aluminium et de matière synthétique de la cuvette inférieure de scellement (18) qui peut être décollé du côté arrière de la partie (12) qui forme le fond de la coque présente, sur son côté non tourné vers la partie (12), un film d'aluminium d'une épaisseur de 15 à 80 µm et de préférence de 25 à 60 µm qui présente :
un contrecollage par un film de matière synthétique en polyamide orienté (oPA), en poly(téréphtalate d'éthylène) (PET) ou en polypropylène orientée (oPP) d'une épaisseur de 10 à 30 µm et de préférence de 15 à 25 µm, ou
est verni à l'aide d'un vernis de protection à base des matières premières nitrocellulose, résine époxy, polyester, polyuréthane ou mélanges desdites matières premières de vernis, appliqué à un poids de 1 à 20 g/m² et de préférence de 7 à 15 g/m².

8. Emballage en coque selon l'une des revendications 1 à 7, **caractérisé en ce que** la couche de scellement à chaud décollable tournée vers le côté arrière de la partie (12) qui forme le fond de la coque est constituée des mêmes composants chimiques de base ou de composants chimiques de base similaires à ceux de la matière synthétique qui forment la surface de scellement de la partie (12) qui forme le fond de la coque ou de mélanges de ces composants de base avec des substances qui ont pour effet une rupture adhésive ou cohésive.

9. Emballage en coque selon la revendication 8, **caractérisé en ce que** le vernis contient comme substances qui ont pour effet une rupture adhésive ou cohésive des acrylates, des polybutylates, des morprimes, de l'acrylate de styrène avec des groupes polyoléfine, du PVC/AC avec de l'acrylate, du PP/butadiène ou du polyester/butadiène/styrène.

10. Emballage en coque selon l'une des revendications 1 à 9, **caractérisé en ce que** le film en matière synthétique décollable tourné vers le côté arrière de la partie (12) qui forme le fond de la coque ou le revêtement en matière synthétique décollable tourné vers le côté arrière de la partie (12) qui forme le fond de la coque est réalisé à base de PVC, de PP, de PP-métallocène, de PE, de PE-métallocène, de PCTFE, de PET, d'EAA, d'ionomères de PE, d'acrylates de PE, d'EVA ou de copolymères avec l'EVA.

11. Emballage en coque selon la revendication 10, **caractérisé en ce qu'**un revêtement décollable est extrudé, co-extrudé ou contrecollé sur le film en matière synthétique décollable.

12. Emballage en coque selon la revendication 10, **caractérisé en ce que** le revêtement en matière synthétique est co-extrudé avec une couche décollable.
